# EUROPEAN PATENT SPECIFICATION

(11) **EP 2 172 366 B1**
(45) Date of publication and mention of the grant of the patent: **27.01.2016**
(21) Application number: 08165565.6
(22) Date of filing: 01.10.2008
(51) Int. Cl.: B60Q 1/24, B60Q 1/32, B60Q 9/00, B60Q 3/02

(54) **Self-propelled agricultural machine**
Selbstangetriebene Landwirtschaftsmaschine
Machine agricole autopropulsée

(43) Date of publication of application: 07.04.2010
(73) Proprietor: CLAAS Tractor S.A.S., 78141 Vélizy-Villacoublay Cedex (FR)
(72) Inventor: Jeppe, Eckehard, 34289 Zierenberg (DE); Ulbrich, Rene, 30163 Hannover (DE)
(74) Representative: Belda, Stefan Johannes

(56) References cited:
- DE-A1- 10 034 379
- DE-A1- 10 321 014
- DE-A1-102004 047 546
- US-A1- 2002 118 547
- US-A1- 2005 007 789
- US-A1- 2006 046 684
- US-A1- 2006 133 099
- US-A1- 2007 057 806
- US-A1- 2007 206 389

## Description

The invention relates to a self-propelled agricultural machine according to the preamble of Claim 1.

From US 2006/0133099 A1 an exit lighting for agricultural machines is known wherein on a terminal of the machine the duration and the mode of operation of various lighting elements arranged on the machine can be adjusted depending on the ambient luminous intensity. Thus, the operator for example can adjust for how many seconds the lighting elements are to remain activated when said operator leaves the machine. He can furthermore establish whether the exit lighting is to be activatable continuously or only in the absence of ambient light. The substantial purpose of the exit lighting is that the operator of the machine following termination of his activity can safely climb down from the machine and see the surroundings of the machine even in poor light conditions. This is required for example when the operator parks the machine on a field at night and leaves the field with an escort vehicle. A further example relates to the parking of the machine in an unlit machine hall Here, the exit lighting is intended to support the operator in safely leaving the machine hall. Disadvantageous in such a known agricultural machine with an exit lighting is that the operator or driver is merely supported by the exit lighting in safely leaving the machine when he leaves the machine. However, if he arrives at the machine in poor light conditions he has to climb into as far as the driver's cab of the machine without any support in which he is only then able to switch-actuated activate various lighting elements in and on the machine.

Such lights are also known for personal vehicles as shown in US2006/0046684.

The object of the present invention is to avoid the disadvantages of the prior art and more preferably further develop a self-propelled agricultural machine in such a manner that safe arrival at the machine, safe climbing on to the machine and safe climbing into the machine for the operator is guaranteed.

According to the invention this object is solved through the characterising features of Claim 1.

In that with a self-propelled agricultural machine with a plurality of lighting elements, which at least partially illuminate the surroundings of the machine, by means of an input unit at least one lighting element of the agricultural machine is selectable, which upon non-operation of the machine is activatable by means of a remote actuation element, the operator is enabled to individually select the lighting element which will enable him to safely arrive, climb on to and climb into the machine upon arrival so that he can quickly and easily commence working operation of the machine. The at least one lighting element thus acts as a welcoming light for the operator of the machine. The remote actuation element is a switch or push switch or a contactlessly operating sensor arranged on the machine.

In order to make the arrival at the machine, the visual external inspection of the entire machine and/or the climbing-up on to the self-propelled agricultural machine very simple and comfortable for the operator, a plurality of lighting elements with an advantageous further development of the invention are activatable simultaneously or in a determinable time sequence by means of the remote actuation element.

With an advantageous further development of the invention the sequence of the activation and/or the selection of the lighting elements to be activated are adjustable by means of the input unit and re-accessibly storable in an electronic storage unit so that the operator can perform and change again at any time if required the sequence and/or the activation according to his own wishes.

In order to minimise the system effort for such an adjustment and storage within the machine the adjustment and storage with an advantageous further development of the invention is integrated in a light control unit present on the machine.

A remote actuation element may be, in an example not being part of the invention a remote control with wireless signal transmission so that the operator of the machine can activate the at least one lighting element even from a greater distance. This is helpful for example when a multiplicity of different machines is parked in a machine hall. Through the activated lighting element of the machine the operator quickly finds the machine to be operated by him within the machine hall and he is additionally not running the risk of overlooking parts of other machines and/or the own machine and in the worst case is injured by such parts.

In order for the operator of the machine not having to keep an additional remote control ready and carry on his person the remote control may, as an example not being part of the invention, be integrated in an ignition key of the machine which is needed by the operator anyhow for operating the machine.

According to the invention the remote actuation element is a switch or push switch arranged on the machine or contactlessly operating sensor so that the operator requires no additional element. The switch or push switch or contactlessly operating sensor is advantageously arranged in a region which the operator reaches easily and as a rule firstly on the machine so that he can activate the at least one lighting element directly upon arrival.

With an advantageous further development of the invention the contactlessly operating sensor is embodied as an optical sensor known per se, for example in the wavelength range visible to the human eye or in the wavelength range not visible to the human eye, or as an acoustic sensor for example on ultrasonic basis or on sound level basis or as a thermal sensor or as capacitive sensor. Thus, an optical sensor for example in form of a light-emitting barrier can be employed wherein an interruption of the light beams between transmitter and receiver activates the at least one lighting element. An acoustic sensor can be embodied for example as a so-called clapping switch, wherein exceeding of a defined sound level, for example through loud hand clapping, triggers the activation of the at least one lighting element. Alternatively for example a thermal switch can be arranged on the machine which triggers activation of the at least one lighting element only when contact occurs in a temperature range which corresponds to the human body temperature A capacitive sensor for example can be arranged on the machine in such a manner that the electrical field in the sursoundings of the sensor coil changes simply through the operator approaching the voltage field of the sensor and this change triggers activation of the at least one lighting element.

Since the operator of the self-propelled agricultural machine as a rule climbs into the driver's cab of the machine via an access ladder at the start of his activity, the switch or push switch or contactlessly operating sensor is operationally connected with the access ladder of the machine so that on contacting and/or moving the access ladder at least one of the lighting elements is activated automatically.

With an advantageous further development of the invention the at least one activatable lighting element is a working spotlight arranged on a lateral region of the machine so that for example the region from which the operator generally approaches and enters the machine is directly illuminated. Additionally or alternatively the at least one activatable lighting element is a working spotlight arranged on a front region of the machine so that the operator for example can directly recognise if there is an obstacle in his future driving path so that he can still remove such obstacle before entering the machine. Additionally or alternatively the at least one activatable lighting unit is a working spotlight arranged in a rear region of the machine so that the operator for example can directly recognise if a rear attachment is attached to the machine which he can still decouple or correctly set if applicable before entering the machine. Additionally or alternatively the at least one activatable lighting element is a working spotlight illuminating an access ladder or an access region of the machine so that the operator for example can safely use the access ladder or the access region. Additionally or alternatively the at least one activable lighting element is a lamp for illuminating the cab interior of the machine so that the operator can safely enter and directly orientate himself in the cab. Additionally or alternatively the at least one activatable lighting element is a working spotlight of the machine illuminating at least one resource monitoring device so that the operator for example even before entering the cab and starting the engine can recognise that he for example has to replenish fuel and/or oil provided that the resource monitoring device comprises a filling level gauge for fuel and/or oil. Additionally or Alternatively the at least one activatable lighting element is a working spotlight of the machine illuminating at least one resource filler neck so that the operator for example even before entering the cab and the manual activation of the corresponding working spotlight can replenish the required resources such as for example fuel and/or oil. Additionally or alternatively the at least one activatable lighting element is an all-round lamp of the machine so that the operator directly senses the activation of said all-round lamp based on the warning effect which increases the attention.

In order to render the operation of the machine even more safe and comfortable for the operator, additional function processes on the agricultural machine can be activated by means of the remote actuation element. These further function processes comprise at least the unlocking of closures arranged on the machine so that for exapple a side flap of the machine is simultaneously co-unlocked and the operator can open said flap without additional aids. Additionally or alternatively the further function processes comprise at least the automatic opening of at least one cab door so that the operator or driver can directly climb into the cab. At the start of his working day the operator frequently brings along to the machine a multiplicity of items such as for example order schedules, customer information, beverages and/or foods and generally requires both hands for this purpose. Through the already opened cab door he can advantageously climb directly into the cab without having to put down the required items beforehand. Additionally or alternatively the further function processes comprise at least the automatic pivoting-out and/or lowering of at least one access ladder so that the operator or driver can directly step on to the access ladder. At the start of his working day the operator frequently brings along a multiplicity of items such as for example order schedules, customer information, beverages and/or foods to the machine and generally requires both hands for this purpose. Through the already directly useable access ladder he can then advantageously directly use the access ladder without having to put down the required items beforehand. Additionally or alternatively the further function processes comprise at least the automatic checking of at least one resource status of the machine and if applicable its indication. Thus, for example the filling level of the fuel tank, the oil filling level and/or the air pressure of the tyres of the machine can be directly checked, If filling levels or pressures which are too low or too high are established, the operator can still react before entering the machine and correct the filling levels or pressures. Additionally or alternatively the further function processes comprise at least the automatic checking of the function status of at least one function element of the machine and if applicable its indication. So it is that for example a defect or damage of a function element can be timely detected and rectified if applicable still in the operating yard even before the operator enters the machine and with said machine leaves the operating yard for a field operation. So as not having to provide additional indications and/or warning lamps on or in the machine, the indication of the resource status and/or the indication of the function status takes place by means of the at least one lighting element activated by means of the remote actuation element with an advantageous further development of the invention. In this way the lighting element can for example be operated in an alternating manner as soon as a resource status or a function status is not OK so that the operator can still directly react and rectify the malfunctioning before entering the machine.

By means of the enclosed drawing the invention is explained in more details in the following.

It shows:
Fig. 1: a schematic perspective view of a machine embodied as a self-propelled forage harvester,
Fig.2: a schematic lateral view of a machine embodied as tractor,
Fig.3: a schematic perspective view of a machine embodied as self-propelled combine harvester and
Fig. 4: an exemplary representation of an input unit arranged on an agricultural machine.

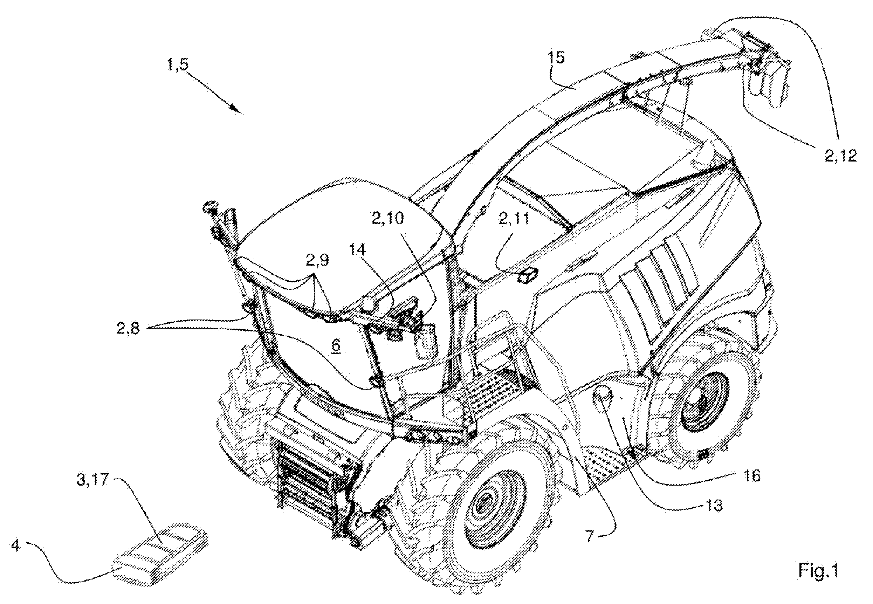

Figure 1 shows a self-propelled agricultural machine 1 in form of a forage harvester 5 in a schematic perspective view. On the forage harvester 5 a multiplicity of lighting elements 2 are arranged whose arrangement and functioning mode will at least partially be discussed in detail in the following. On a front lateral region of the cab 6 of the forage harvester 5 two working spotlights 8 are arranged which illuminate a region directly in front of the forage harvester 5. On an upper region of the cab 6 four working spotlights 9 are arranged which illuminate a slightly more distant front region of the forage harvester 5. On a lateral mirror bracket 14 of the forage harvester 5 a working spotlight 10 is arranged which illuminates an access ladder 7 and the region round about the access ladder 7. Furthermore, a working spotlight 11 is arranged on a lateral body region of the forage harvester 5 which illuminates a resource filler neck 13, in this case the fuel filler neck of the fuel tank 16. On a rear end of the overload elbow 15 of the forage harvester 5 two working spotlights 12 are arranged which in the transport position of the overload elbow 15 shown, illuminate the region directly behind the forage harvester 5. If an operator now approaches the forage harvester 5 for example in an unlit machine hall or in darkness, he actuates a remote actuation element 3 which in the case presented in oversize here is embodied as a remote control 17 integrated in an ignition key for operating the forage harvester 5 wherein the embodiment integrated into the ignition key is not part of the invention. By actuating the remote control 17 the working spotlight 10 illuminating for example the access ladder 7 is activated so that the operator can safely climb up the forage harvester 5. Furthermore it is possible that by actuating the remote control 17 the two working spotlights 8 are activated, so that the operator is able to see the region directly in front of the forage harvester 5 in order for example to be able to check even before climbing up the forage harvester 5 if an front attachment which is not shown here has been correctly attached and is ready for operation.

Furthermore it is possible that by actuating the remote control 17 the four working spotlights 9 arranged on the cab roof are activated, so that the operator is able to see his future travelling path and remove any obstacles that might be present even before he climbs up on to the forage harvester 5.

Furthermore it is possible that by actuating the remote control 17 the two working spotlights 12 arranged at the end of the overload elbow 15 are activated so that the operator can check for example even before climbing up on to the forage harvester 5 if a trailer which is not shown here has been correctly hitched to the forage harvester 5.

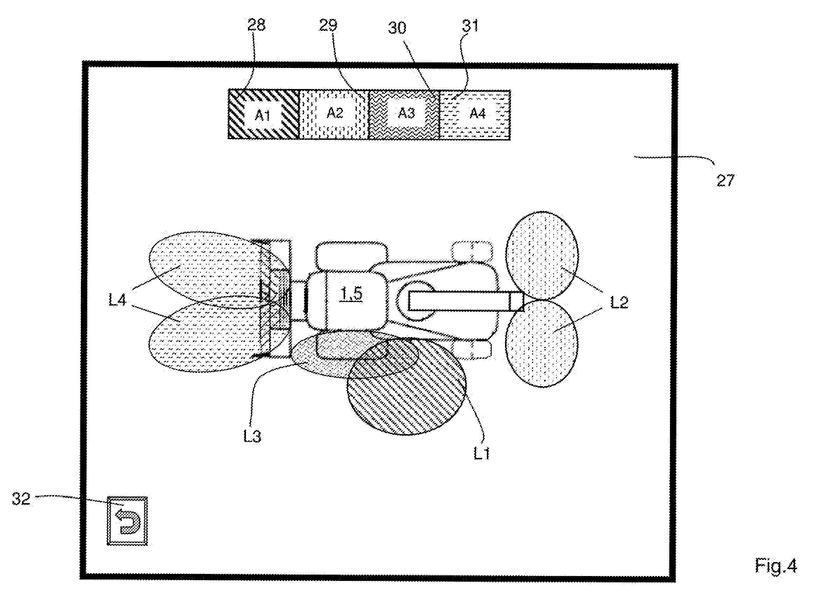

Furthermore it is possible that by actuating the remote control 17 a resource status monitoring device is activated which for example monitors the fuel quantity present in the fuel tank 16. If the resource status monitoring device should now detect that the fuel quantity is below a defined threshold value, it automatically activates the working spotlight 11 which illuminates the Resource filler neck 13. Thus the operator receives information even before climbing up on to the forage harvester 5 that he has to fill up fuel so that he can do this directly. Furthermore it is advantageous for the operator that the resource filler neck 13 is illuminated by the working spotlight 11 so that he can safely and comfortably refuel even in darkness. Furthermore it is conceivable that the remote actuation element 3 has a plurality of remote controls 17 at its disposal by means of which different lighting elements 2 and if applicable different additional function processes can be activated. The examples mentioned here for activities triggered through actuating the remote control 17 stand for a multiplicity of possibilities. These are selectable individually or in groups by means of an input unit which will still be discussed in more detail exemplarily in connection with the description of Figure 4.

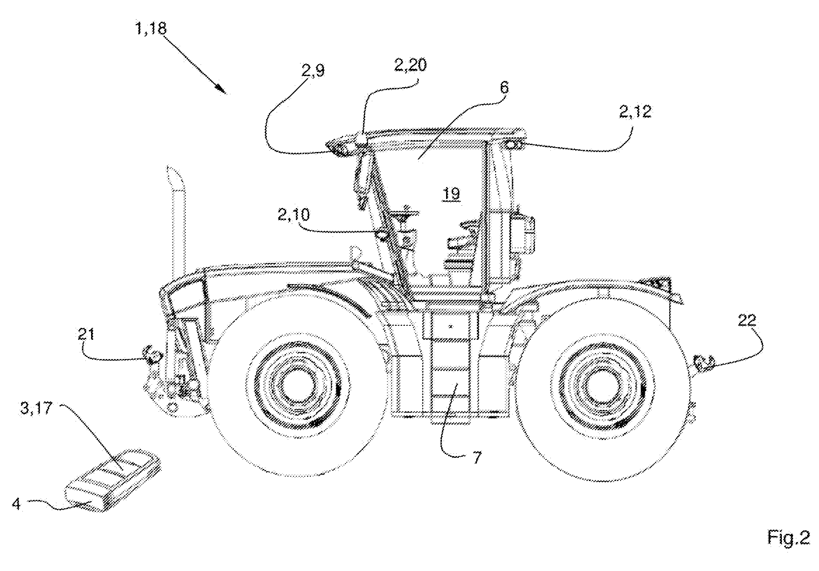

Figure 2 shows a self-propelled agricultural machine 1 in form of a tractor 18 in a schematic lateral view. On the tractor 18 a multiplicity of lighting elements 2 are arranged, the arrangement and manner of operation of which are discussed at least partially in more detail in the following. On a front upper region of the cab 6 of the tractor 18, several working spotlights 9 are arranged which illuminate a region in front of the tractor 18. On a rear upper region of the cab 6, several working spotlights 12 are arranged which illuminate a region behind the cab 6 and behind the tractor 18. On a lateral spar of the cab 6 a working spotlight 10 is arranged which illuminates an access ladder 7 and the region in front of the access ladder 7. Within the cab 6, a plurality of interior lamps, which are not shown here, is additionally arranged which illuminates the cab interior. On an upper region of the cab 6 an all-round lamp 20 is furthermore arranged which is to be activated when travelling on the road provided that certain transport dimensions are exceeded. If an operator now approaches the tractor 18 for example in an unlit machine hall or in darkness, he actuates a remote actuation element 3 which in the case presented in oversize here is embodied as a remote control 17 integrated in an ignition key 4 for operating the tractor 18 , wherein the embodiment integrated into the ignition key is not part of the invention. By actuating the remote control 17 for example the working spotlight 10 illuminating the access ladder 7 is activated, so that the operator can safely climb up on to the tractor 18.

It is furthermore possible that by actuating the remote control 17 the working spot-lights 9 are activated so that the operator is able to see the region in front of the tractor 18, in order for example to be able to check if there is an obstacle in his future driving path or if an attachment device adapted to the front lifting mechanism 21 of the tractor 18 which is not shown here is correctly attached and ready for operation before climbing up on to the tractor 18. It is furthermore possible that by actuating the remote control 17 the working spotlights 12 are activated, so that the operator is able to see the region behind the tractor 18 in order for example to be able to adapt an attachment device which is not shown here to the rear lifting mechanism 21 of the tractor 18 before climbing up on to the tractor 18

Furthermore it is possible that by actuating the remote control 17 a resource status monitoring device is activated, which for example monitors the fuel quantity present in the fuel tank, the quantity and the status of the engine oil and/or the quantity and the status of the hydraulic oil. If the resource status monitoring device should now detect that at least one of the resource quantities is below a defined threshold value or the status of the oil does not correspond to the defined targets, said resource status monitoring device automatically activates the all-round lamp 20. Thus the operator is given information that the resources have to be checked so that he can perform this directly before climbing up on to the tractor 18.

It is furthermore possible that by actuating the remote control 17 the cab door 19 of the tractor 18 is automatically unlocked and opened by means of a motor drive which is not shown here, so that the operator on arrival on the machine 1 can directly climb into the cab 6 without having to open the cab door 19.

It is furthermore possible that by actuating the remote control 17, interior lamps which are not shown here are activated within the cab 6 so that the operator can directly perceive the dimensions of the cab 6 and the components contained therein.

It is furthermore conceivable that the remote actuation element 3 has a plurality of remote controls 17 at its disposal by means of which different lighting elements 2 and if applicable different additional function processes can be activated. The examples mentioned here for lighting elements 2 and triggered activities activated through operating the remote control 17 stand for a multiplicity of possibilities.

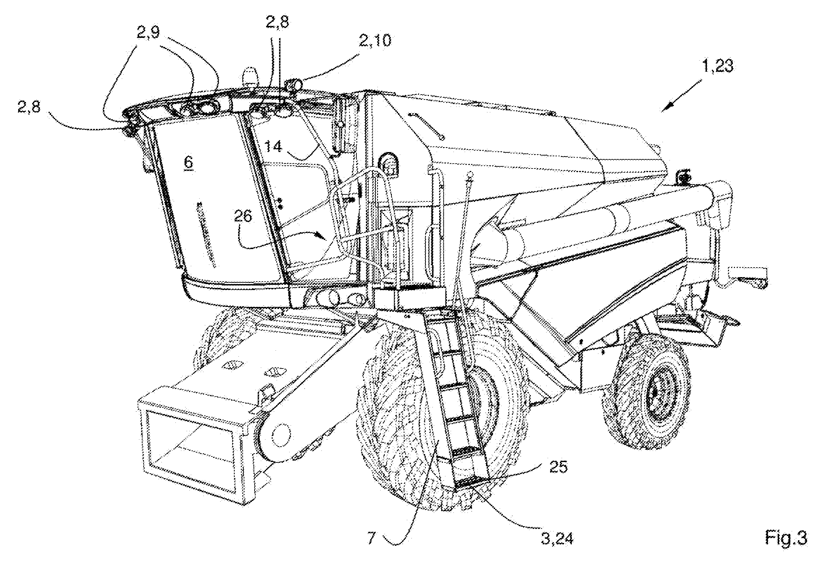

Figure 3 shows a self-propelled agricultural machine 1 in form of a combine harvester 23 in a schematic perspective view. On the combine harvester 23 a multiplicity of lighting elements 2 are arranged, whose arrangement and manner of operation will at least partially be discussed in more detail in the following. On the upper lateral region of the cab 6 of the combine harvester 23 several working spotlights 8 are arranged which illuminate a region directly in front of the combine harvester 23. On an upper region of the cab 6 several working spotlights 9 are arranged which illuminate a slightly more distant front region of the combine harvester 23. On a lateral mirror bracket 14 of the combine harvester 23 a working spotlight 10 is arranged which illuminates an access ladder 7 and an access platform 26 embodied on the side of the cab 6. If an operator now approaches the combine harvester 23 for example in an unlit machine hall or in darkness, he first steps on to the lower-most step 25 of the access ladder 7. In step 25 a remote actuation element 3 in form of a switch 24 is integrated, which closes its contact through stepping on to the step 25. By actuating the switch 24 for example the working spotlight 10 illuminating the access ladder 7 and the access platform 26 is activated, so that the operator can safely climb up on to the combine harvester 23. It is furthermore possible that by actuating the switch 24 the working spotlights 8 are activated, so that the operator is able to see the region directly in front of the combine harvester 23 in order for example to check if an attachment which is not shown here has been correctly attached and is ready for operation before climbing up on to the combine harvester 23.

It is furthermore possible that by actuating the switch 24 the four working spotlights 9 arranged on the cab roof are activated so that the operator is able to see his future driving path and remove any obstacles that may be present before climbing up on to the combine harvester 23. It is furthermore conceivable that on the combine harvester 23 in positions which are within easy reach of the operator, a plurality of switches 24 are arranged by means of which various lighting elements 2 and if applicable various function processes can be activated. The switches 24 can also be embodied as contactlessly operating sensors.

The examples mentioned here for lighting elements activated through actuating the switch stand for a multiplicity of possibilities.

In an exemplary representation, Figure 4 shows an input unit 27 in form of a touch-screen display arranged on a self-propelled agricultural machine 1. The agricultural machine 1 is a forage harvester 5 according to Figure 1. To visualise the function of the selectable working spotlights A1 ,A2,A3,A4 the forage harvester 5 is shown in the input unit as pictogram in a view from the top. Furthermore, the illumination regions L1,L2,L3,L4 of the working spotlights A1,A2,A3,A4 are shown. By means of the input unit 27 the operator is able to select and re-accessibly store in a storage unit the lighting elements activatable by means of the remote actuation element. He can for example actuate the selection field 28 for the working spotlight A1 in order to determine that upon actuation of the remote actuation element the illumination region L1 is to be illuminated. The working spotlight A1 here corresponds for example to the working spotlight 11 from Figure 1. Alternatively or additionally the operator can for example actuate the selection field 29 for the working spotlight A2 in order to determine that upon actuation of the remote actuation element the illumination region L2 is to be illuminated. The working spotlights A2 here correspond for example to the working spotlights 12 from Figure 1. Alternatively or additionally the operator can for example actuate the selection field 30 for the working spotlight A3 in order to determine that upon actuation of the remote actuation element the illumination region L3 is to be illuminated. The working spotlight A3 here corresponds for example to the working spotlight 10 from Figure 1. Alternatively or additionally the operator can for example actuate the selection field 31 for the working spotlight A4 in order to determine that upon actuation of the remote actuation element the illumination region L4 is to be illuminated. Here the working spotlights A4 correspond for example to the working spotlights 8 from Figure 1. As soon as the operator has made his selection and actuated the corresponding selection fields 28, 29, 30, 31 he can actuate a menu field in order to change to another display menu so that the input unit 27 can also be utilised for additional input and/or display purposes within the machine control. By leaving the selection menu the setting carried out last is stored. As soon as the operator then utilises the remote actuation element, the lighting elements are actuated in accordance with the setting.

**List of reference characters**

| | | | |
|---|---|---|---|
| 1 | Working machine | 32 | Menu field |
| 2 | Lighting element | A1 | Working spotlight |
| 3 | Remote actuation element | A2 | Working spotlight |
| 4 | Ignition key | A3 | Working spotlight |
| 5 | Forage harvester | A4 | Working spotlight |
| 6 | Cab | L1 | Illumination region |
| 7 | Access ladder | L2 | Illumination region |
| 8 | Working spotlight | L3 | Illumination region |
| 9 | Working spotlight | L4 | Illumination region |
| 10 | Working spotlight | | |
| 11 | Working spotlight | | |
| 12 | Working spotlight | | |
| 13 | Resource filler neck | | |
| 14 | Mirror bracket | | |
| 15 | Overload elbow | | |
| 16 | Fuel tank | | |
| 17 | Remote control | | |
| 18 | Tractor | | |
| 19 | Cab door | | |
| 20 | All-round lamp | | |
| 21 | Front lifting mechanism | | |
| 22 | Rear lifting mechanism | | |
| 23 | Combine harvester | | |
| 24 | Switch | | |
| 25 | Step | | |
| 26 | Access platform | | |
| 27 | Input unlit | | |
| 28 | Selection field | | |
| 29 | Selection field | | |
| 30 | Selection field | | |
| 31 | Selection field | | |

## Claims

1. A self-propelled agricultural machine (1) with a plurality of lighting elements (2), which at least partially illuminate the surroundings of the machine (1), **charac terized** in that by means of an input unit (27) at least one lighting element (2) of the agricultural machine (1) is selectable, which upon non-operation of the machine (1) is activatable by means of a remote actuation element (3), wherein the remote actuation element (3) is a switch (24) or push switch or contactlessly operating sensor arranged on the machine (1), wherein the switch (24) or push switch or contactlessly operating sensor is operationally connected with an access ladder (7) of the machine (1) and upon contacting and/or moving of the access ladder (7) at least one of the lighting elements (2) is activated, and wherein by means of the remote actuation element (3) additional function processes on the agricultural machine (1) are activatable.

2. The self-propelled agricultural machine (1) according to claim 1, **characterised in that** simultaneously or in a determinable time sequence a plurality of lighting elements (2) are activatable by means of the remote actuation element (3).

3. The self-propelled agricultural machine (1) according to any one of the preceding claims, **characterised in that** the sequence of activation and/or the selection of the lighting elements (2) to be activated is/are adjustable and reaccessibly storable in an electronic storage unit by means of the input unit (27).

4. The self-propelled agricultural machine (1) according to claim 3, **characterized in that** the setting and storage is integrated in a light control unit.

5. The self-propelled agricultural machine (1) according to Claims 1 to 4, **characterized in that** the contactlessly operating sensor is embodied as optical sensor or as acoustic sensor or thermal sensor or as capacitive sensor.

6. The self-propelled agricultural machine (1) according to any one of the preceding claims, **characterized in that** at least one activatable lighting element (2)
- is a working spotlight (10) arranged on a lateral region of the machine (1) and/or
- is a working spotlight (8, 9) arranged on a front region of the machine (1) and/or
- is a working spotlight (12) arranged on a rear region of the machine (1) and/or
- is a working spotlight (10) illuminating an access ladder (7) or an access region of the machine (1) and/or
- is a lamp for illuminating the cab interior of the machine (1) and/or
- is a working spotlight of the machine (1) illuminating at least one resource status monitoring device and/or
- is a working spotlight (11) of the machine (1) illuminating at least one resource filler neck (13) and/or
- is an all-round lamp (20) of the machine (1).

7. The self-propelled agricultural machine (1) according to Claim 1, **characterized in that** the additional function processes can at least comprise
- the unlocking of closures arranged on the machine (1) and/or
- the automatic opening of at least one cab door (19) and/or
- the automatic pivoting-out and/or lowering of at least one access ladder (7) and/or
- the automatic checking of at least one resource status of the machine (1) and if applicable the display of said status and/or
- the automatic checking of the function status of at least one function element of the machine (1) and if applicable the display of said function status.

8. The self-propelled agricultural machine (1) according to Claim 7, **characterized in that** the display of the resource status and/or the display of the function status is performed by means of the at least one lighting element (2) activated by means of the remote actuation element (3).

## Patentansprüche

1. Selbstangetriebene landwirtschaftliche Maschine (1) mit mehreren Beleuchtungselementen (2), die die Umgebung der Maschine (1) zumindest teilweise beleuchten, **dadurch gekennzeichnet, dass** mittels einer Eingabeeinheit (27) wenigstens ein Beleuchtungselement (2) der landwirtschaftlichen Maschine (1) auswählbar ist, das beim Nicht-Betrieb der Maschine (1) mittels eines Fernbedienungselementes (3) aktivierbar ist, wobei das Fernbedienungselement (3) ein Schalter (24) oder Druckschalter ist, oder ein kontaktlos wirkender Sensor ist, der auf der Maschine (1) angeordnet ist, wobei der Schalter (24) oder Druckschalter oder der kontaktlos wirkende Sensor operativ mit einer Zugangsleiter (7) der Maschine (1) verbunden ist, und auf das Kontaktieren und/oder Bewegen der Zugangsleiter (7) wenigstens eines der Beleuchtungselemente (2) aktiviert wird, und wobei mittels des Fernbedienungselementes (3) weitere Funktionsprozesse auf der landwirtschaftlichen Maschine (1) aktivierbar sind.

2. Selbstangetriebene landwirtschaftliche Maschine (1) nach Anspruch 1, **dadurch gekennzeichnet, dass** mehrere Beleuchtungselemente (2) gleichzeitig oder in einer bestimmbaren Zeitsequenz mittels des Fernbedienungselementes (3) aktivierbar sind.

3. Selbstangetriebene landwirtschaftliche Maschine (1) nach einem der vorangehenden Ansprüche, **dadurch gekennzeichnet, dass** die Aktivierungssequenz und/oder die Auswahl der zu aktivierenden Beleuchtungselemente (2) mittels der Eingabeeinheit (27) anpassbar ist/sind und in einer elektronischen Speichereinheit derart gespeichert wird/werden, dass ein erneuter Zugriff möglich ist.

4. Selbstangetriebene landwirtschaftliche Maschine (1) nach Anspruch 3, **dadurch gekennzeichnet, dass** die Einrichtung und die Speicherung in einer Lichtkontrolleinheit integriert sind.

5. Selbstangetriebene landwirtschaftliche Maschine (1) nach einem der Ansprüche 1 bis 4, **dadurch gekennzeichnet, dass** der kontaktlos wirkende Sensor als optischer Sensor oder als akustischer Sensor oder Wärmesensor oder als kapazitiver Sensor ausgebildet ist.

6. Selbstangetriebene landwirtschaftliche Maschine (1) nach einem der vorangehenden Ansprüche, **dadurch gekennzeichnet, dass** das wenigstens eine aktivierbare Beleuchtungselement (2) Folgendes ist:
- ein Arbeitsscheinwerfer (10), der auf einem lateralen Bereich der Maschine (1) angeordnet ist; und/oder
- ein Arbeitsscheinwerfer (8, 9), der auf einem vorderen Bereich der Maschine (1) angeordnet ist; und/oder
- ein Arbeitsscheinwerfer (12), der auf einem hinteren Bereich der Maschine (1) angeordnet ist; und/oder
- ein Arbeitsscheinwerfer (10), der eine Zugangsleiter (7) auf einem Zugangsbereich der Maschine (1) beleuchtet; und/oder
- eine Lampe ist, die das Innere der Kabine der Maschine (1) beleuchtet; und/oder
- ein Arbeitsscheinwerfer der Maschine (1), die wenigstens eine Ressourcenstatusüberwachungsvorrichtung beleuchtet; und/oder
- ein Arbeitsscheinwerfer (11) der Maschine (1), der wenigstens einen Ressourcenfüllhals (13) beleuchtet; und/oder
- eine Rundumlampe (20) der Maschine (1) ist.

7. Selbstangetriebene landwirtschaftliche Maschine (1) nach Anspruch 1, **dadurch gekennzeichnet, dass** die weiteren Funktionsprozesse wenigstens aufweisen können
- das Entriegeln der Verschlüsse, die auf der Maschine (1) angeordnet sind; und/oder
- die automatische Öffnung der wenigstens einen Kabinentür (19); und/oder
- das automatische Herausschwenken und/oder Absenken wenigstens einer Zugangsleiter (7); und/oder
- das automatische Überprüfen wenigstens des Ressourcenstatus der Maschine (1), und ggf. das Anzeigen dieses Status und/oder
- das automatische Überprüfen des Funktionsstatus von wenigstens einem Funktionselement der Maschine (1) und, ggf. das Anzeigen des Funktionsstatus.

8. Selbstangetriebene landwirtschaftliche Maschine (1) nach Anspruch 7, **dadurch gekennzeichnet, dass** die Anzeige des Ressourcenstatus und/oder die Anzeige des Funktionsstatus mittels des wenigstens einen Beleuchtungselementes (2), das mittels des Fernbedienungselementes (3) aktiviert wird, durchgeführt wird.

## Revendications

1. Une machine agricole automotrice (1) comprenant une pluralité d'éléments d'éclairage (2) qui éclairent au moins partiellement les abords de la machine (1), **caractérisée en ce qu'**à l'aide d'une unité d'entrée (27) peut être sélectionné au moins un élément d'éclairage (2) de la machine agricole (1), lequel peut être actionné au moyen d'un élément d'actionnement à distance (3) lors du non-fonctionnement de la machine (1), l'élément d'actionnement à distance (3) étant un interrupteur (24) ou un interrupteur à poussoir ou un capteur à fonctionnement sans contact disposé sur la machine (1), l'interrupteur (24) ou l'interrupteur à poussoir ou le capteur à fonctionnement sans contact étant connecté de manière opératoire à une échelle d'accès (7) de la machine (1) et, en cas de mise en contact et/ou de déplacement de l'échelle d'accès (7), au moins un des éléments d'éclairage (2) étant actionné, et des processus fonctionnels supplémentaires pouvant être actionnés sur la machine agricole (1) au moyen de l'élément d'actionnement à distance (3).

2. La machine agricole automotrice (1) selon la revendication 1, **caractérisée en ce qu'**une pluralité d'éléments d'éclairage (2) peuvent être actionnés simultanément ou selon une séquence chronologique déterminable au moyen de l'élément d'actionnement à distance (3).

3. La machine agricole automotrice (1) selon l'une quelconque des revendications précédentes, **caractérisée en ce que** la séquence d'actionnement et/ou la sélection des éléments d'éclairage (2) à actionner est/sont réglable(s) et mémorisable(s) de manière réaccessible dans une unité de mémorisation électronique au moyen de l'unité d'entrée (27).

4. La machine agricole automotrice (1) selon la revendication 3, **caractérisée en ce que** le réglage et la mémorisation sont intégrés dans une unité de commande d'éclairage.

5. La machine agricole automotrice (1) selon les revendications 1 à 4, **caractérisée en ce que** le capteur à fonctionnement sans contact est conformé en capteur optique ou en capteur acoustique ou en capteur thermique ou en capteur capacitif.

6. La machine agricole automotrice (1) selon l'une quelconque des revendications précédentes, **caractérisée en ce qu'**au moins un élément d'éclairage actionnable (2)
- est un projecteur de travail (10) disposé dans une zone latérale de la machine (1) et/ou
- est un projecteur de travail (8, 9) disposé dans une zone avant de la machine (1) et/ou
- est un projecteur de travail (12) disposé dans une zone arrière de la machine (1) et/ou
- est un projecteur de travail (10) éclairant une échelle d'accès (7) ou une zone d'accès de la machine (1) et/ou
- est une lampe pour éclairer l'intérieur de la cabine de la machine (1) et/ou
- est un projecteur de travail de la machine (1) éclairant au moins un dispositif de surveillance de l'état de ressources et/ou
- est un projecteur de travail (11) de la machine (1) éclairant au moins une tubulure de remplissage de ressource (13) et/ou
- et une lampe omnidirectionnelle (20) de la machine (1).

7. La machine agricole automotrice (1) selon la revendication 1, **caractérisée en ce que** les processus fonctionnels supplémentaires peuvent comprendre au moins
- le déverrouillage de fermetures disposées sur la machine (1) et/ou
- l'ouverture automatique d'au moins une porte de cabine (19) et/ou
- la sortie pivotante et/ou la descente automatiques d'au moins une échelle d'accès (7) et/ou
- le contrôle automatique d'au moins un état de ressources de la machine (1) et, s'il y a lieu, l'affichage dudit état et/ou
- le contrôle automatique de l'état de fonctionnement d'au moins un élément de fonctionnement de la machine (1) et, s'il y a lieu, l'affichage dudit état de fonctionnement.

8. La machine agricole automotrice (1) selon la revendication 7, **caractérisée en ce que** l'affichage de l'état de ressources et/ou l'affichage de l'état de fonctionnement est effectué au moyen du au moins un élément d'éclairage (2) actionné au moyen de l'élément d'actionnement à distance (3).
